(19) Europäisches Patentamt
European Patent Office
Office européen des brevets

(11) **EP 3 849 112 A1**

(12) **EUROPEAN PATENT APPLICATION**

(43) Date of publication:
**14.07.2021 Bulletin 2021/28**

(51) Int Cl.:
*H04J 3/06* (2006.01)   *H04W 56/00* (2009.01)

(21) Application number: **20382008.9**

(22) Date of filing: **08.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Ikerlan, S. Coop**
**20500 Arrasate-Mondragon (ES)**

(72) Inventors:
• **SEIJO GÓMEZ, Óscar**
 **E-20500 Arrasate-Mondragón, Guipúzcoa (ES)**
• **VAL BEITIA, Iñaki**
 **E-20500 Arrasate-Mondragón, Guipúzcoa (ES)**

(74) Representative: **ABG Intellectual Property Law, S.L.**
**Avenida de Burgos, 16D**
**Edificio Euromor**
**28036 Madrid (ES)**

(54) **A METHOD FOR TIME SYNCHRONIZATION BETWEEN A MASTER AND AT LEAST ONE SLAVE**

(57)     The present invention is related to a method for time synchronization between a master and at least one slave connected by a network. The synchronization method is being characterized by a new enhanced time stamping method that have been proved to be very effective when the network transmissions are Wireless where said transmissions are supported on channels are based on an electromagnetic signal which may be reflected several times before reaching the destination under Non-Line-Of-Sight conditions or be affected by time-variant conditions. Even under these conditions, the present invention allows to reach sub-nanosecond time transfer accuracy.

Prior art

FIG. 1

## Description

## FIELD OF THE INVENTION

The present invention is related to a method for time synchronization between a master and at least one slave connected by a network. The synchronization method is being characterized by a new enhanced timestamping method that have been proved to be very effective when the network transmissions are Wireless where said transmissions are supported on channels are based on an electromagnetic signal which may be reflected several times before reaching the destination under Non-Line-Of-Sight conditions or be affected by time-variant conditions. Even under these conditions, the present invention allows to reach sub-nanosecond time synchronization accuracy.

Along the description accuracy, trueness and precision terms are used as defined by the ISO 5725-1:1994 [12]. Trueness is defined as the difference between the mean value of a series of results and the true value, precision is defined as the standard deviation of a series of results, and accuracy is defined as the combination of both the trueness and accuracy. Then, an accurate system is a system that has both good trueness, and good precision.

## PRIOR ART

The Time-Sensitive networks paradigm envisions the integration of Operation Technology and Information Technology in the same network. A lot of efforts are being made by researchers in different fields to obtain a solid solution that could support the vast variety of applications and their requirements in a single integrated hybrid and heterogeneous network. One of the main requirements and challenges of Time-Sensitive networks is sharing a common base time along every element of the network. One single failure in the time synchronization can lead to the failure of the entire system, which can cause from loss of profits to loss of human lives.

A common approach to time distribution is the use of a GNSS satellite constellation. GNSS-based solutions can obtain time synchronization accuracy in the ten nanosecond range. These considerations assume that the nodes are situated in an open space with LoS (Line-of-Sight) to the GNSS system. In addition, bad environmental and climate conditions can significantly deteriorate the link quality and, hence, the synchronization performance.

The second approach is time distribution within a communication system using PTP or a similar protocol. The precision of Common PTP hardware timestamping implementations is proportional to the timestamping clock period, and then it cannot provide sub-nanosecond time synchronization in most systems. The protocol White Rabbit, stands out as a solution to eliminate the PTP limitations.

Wireless systems exhibit several limitations that challenge successful high-performance time synchronization. Some of those limitations are low bandwidth, multipath propagation, channel variation over time, and the lack of (Line-of-Sight) LoS. The multipath propagation produces signal time-dispersion that also affects time synchronization performance. In addition, the changes of the environment over time yield to a time-variant Channel Impulse Response (CIR) and, thus, a variant signal time dispersion. Time-variant channels are present in networks with mobility which might be produced by moving communication nodes and/or moving environment. The lack of LoS produces strong variations of the wireless channel delay, which in turn introduces a strong error in the time synchronization. The combined effect of these phenomena greatly increases the error on the timestamps and, thus, are challenging hurdles for high-performance time synchronization over real-world wireless channels.

It is known that timestamps based on conventional frame start detectors (or conventional timestamps) have two main issues in wireless systems. In the first place, they cannot guarantee a time transfer accuracy better than the sampling period. In the second place, the multipath propagation and the wireless channel time-variant character reduces the precision of the frames Time-of-Arrival (ToA), which introduces an error component in the time synchronization.

There are several wireless custom systems in the literature for different wireless technologies that are based on PTP or similar protocols using hardware timestamps. An 802.11g modem implementation over Field-programmable Gate Array (FPGA) with conventional hardware timestamps is known. But this solution is far from the sub-nanosecond time synchronization performance.

Advanced timestamping techniques have been proposed in the literature in order to obtain sub-nanosecond time synchronization over IEEE 802.11. One design is based on conventional hardware timestamps combined with a synchronizer used to calculate the phase difference between the transmitter and receiver clocks. However, the performance of the system is highly deteriorated for time-variant channels. A solution that has been proposed uses the interpolation of the cross-correlation peak to take timestamps with subsample precision and an equalizer to combat the multipath components and reduce the synchronization error. However, the system is still designed for LoS conditions, and it is vulnerable to strong multipath components.

There are also some attempts to port white rabbit to the wireless domain. The wireless white rabbit approaches are mainly based on transmitting the clock phase and frequency from the master to the slave, and synchronize the slave clock by using an Analog Phase Locked Loop (PLL). However, the system performance is highly degraded when a simple multipath propagation channel is considered, and the synchronization accuracy drops immediately.

The present invention overcomes the drawbacks and problems identified in the prior art using an improved timestamping method (enhanced timestamping) for sub-nanosecond time synchronization which precisely estimates the frames ToA in severe multipath conditions. According to a preferred embodiment of the invention the enhanced timestamping uses the whole CIR to precisely estimate the ToA and can be seamlessly used in both LoS and NLoS conditions, because it does not rely on the detection of the main channel component and because it is very robust to multipath propagation.

## DESCRIPTION OF THE INVENTION

The present invention provides a solution for the problems described above by an enhanced timestamping method for sub-nanosecond time synchronization according to claim 1, a system according to claim 14 and a computer program product according to claim 15. In dependent claims, preferred embodiments of the invention are defined.

A first inventive aspect provides a *method for time synchronization between a master and at least one slave wherein the synchronization method comprises a frame exchange exchanging at least a first frame from the master to the slave and a second frame from the slave to the master;*

*wherein for a communication between a transmitter and a receiver through an $i^{th}$ channel a timestamping correction factor is determined according to the following steps:*

> *a) generating a signal s(t) by the transmitter; being s(t) generated from a predetermined first sampled sequence s[n], the first sampled sequence s[n] being known by the transmitter and receiver and sampled with a predetermined sampling period T;*
> *b) sending the signal s(t) by the transmitter through the $i^{th}$ channel;*
> *c) receiving a signal r(t) by the receiver, being the response to the sent signal s(t) sent by the transmitter through the $i^{th}$ channel, wherein r(t) may be expressed as: r(t) = s(t) * h(t), being h(t) the $i^{th}$ channel impulse response;*
> *d) sampling received signal r(t) as a second sampled sequence r[n], sampled with the sampling period T;*
> *e) computing the discrete impulse response of the channel h[n] depending on the first sampled sequence s[n] and on the second sampled sequence r[n], being h[n] a representation of h(t) in the discrete domain;*
> *f) determining a timestamping correction factor of the $i^{th}$ channel $\tau_i > 0$ as the mean delay value of the transmission of a signal through said $i^{th}$ channel being determined as:*

$$\tau_i = T \frac{\sum_W |h[n]|^2 \cdot n}{\sum_W |h[n]|^2}$$

*wherein W is a sum window and n the sum index; and,*

*wherein the synchronization between a master and at least one slave is determined according to the following steps:*

*g) determining at least four timestamps when exchanging the at least one first frame between the master as transmitter and the at least one slave as receiver through a first channel and the second frame between the at least one slave as transmitter and the master as receiver through a second channel by:*

> - *determining a first timestamp $t_1$ of the first frame, stamped by the master when transmitted said first frame through the first channel by the master to the slave,*
> - *determining a second timestamp $t_2$ of the first frame, stamped by the slave when it arrives the slave,*
> - *determining a third timestamp $t_3$ of the second frame, stamped by the slave when transmitted through the second channel by the slave,*
> - *a fourth timestamp $t_4$ of the second frame, stamped by the master when it arrives the master;*

*h) determining a time correction Δt between the local time of the at least one slave and the local time of the master as:*

> -

$$\Delta t = t'_2 - t_1 - \frac{t'_2 - t_1 + t'_4 - t_3}{2};$$

> *being $t'_2$ and $t'_4$ corrected timestamps determined as $t'_2 = t_2 + \tau_1$, and $t'_4 = t_4 + \tau_2$ being $\tau_1$ the delay of the first channel and $\tau_2$ the delay of the second channel;*

*correcting the local time of the master, of the at least one slave or both with the time correction Δt computed in the previous step synchronizing the master and the at least one slave.*

Throughout this document, *frame* will be understood as a digital data transmission unit in telecommunication systems.

Throughout this document, *master and slaves* will be understood as nodes or devices of a communication system, being the master a reference node. The clock of the slaves will be synchronized to the local time of the master, being said time a common reference. The invention also allows to use the time of certain slave as the reference time. To perform the time synchronization, some timestamps of frames exchanged between two nodes have to be taken. Therefore, the method comprises a frame exchange between a master and at least one slave. Depending on the frame that is exchanging, the master and the slave can be either, transmitter or receiver.

Throughout this document, *first sampled sequence s[n]* will be understood as a pseudorandom white sequence known by the receiver and transmitter. The sequence s[n] is sent according to a preferred embodiment using a pulse-shaping filter and sampled with a predetermined sampling period.

Throughout this document, *signal s(t)* will be understood as the transmitted signal generated from a sampled sequence s[n].

Throughout this document, *signal r(t)* will be understood as the received signal by the receiver being the response to the signal s(t) sent by the transmitter. Signal r(t) may be expressed as the convolution of s(t) and h(t), being h(t) the impulse response of the communication channel (CIR) through which the signal s(t) is transmitted.

Throughout this document, *second sampled sequence r[n]* will be understood as the received sequence resulted from sampling the received signal r(t), sampled with the sampling period T.

Throughout this document, h[n] will be understood as the discrete impulse response of the communication channel h(t), that is the representation of h(t) in the discrete domain. The discrete channel impulse response has to be estimated at the receiver and its estimation depends on the first sampled sequence s[n] and the second sampled sequence r[n].

Throughout this document, $\tau_i$ will be understood as a correction factor of the timestamp of a signal through said communication channel, being said correction factor dependent on the channel properties, and in the context of this invention a value greater than zero.

To perform the time synchronization, at least four timestamps have to be taken when exchanging frames between the master and the slave.

Throughout this document, *timestamp* will be understood as a record of the time of occurrence of a particular event.

The first timestamp $t_1$ is the timestamp stamped by the master when transmitted the first frame exchange through a first channel from the master to the slave. The second timestamp $t_2$ is the timestamp stamped by the slave when the first frame arrives the slave. The third timestamp $t_3$ is the timestamp stamped by the slave when sending the second frame through a second channel. The fourth timestamp $t_4$ is the timestamp stamped by the master when the second frame arrives the master.

The multipath propagation, the time-variant character and the limited sampling period T reduces the precision of timestamps $t_2$ and $t_4$ s, which introduces an error component in the time synchronization.

In order to perform the synchronization, the time correction between the local time of the master and the local time of the slave is determinate by using the previous timestamps. The second and fourth timestamps (times of arrivals) are corrected with the respective timestamp correction factor $\tau_i$. The timestamp $t_2$ is corrected with the timestamp correction factor $\tau_1$ of the first channel through which the first frame is sent from the master to the slave. The timestamp $t_4$ is corrected with the timestamp correction factor $\tau_2$ of the second channel through which the second frame is sent from the slave to the master.

Once the time correction is determined, the local time of the nodes are corrected in order to achieve the accurate time synchronization.

Determining the $\tau_i$ as the mean channel delay according to the invention results in a simple and robust expression to estimate the Time-of-Arrival (ToA) of the received frames by correcting the timestamps, because it is not vulnerable to start errors, as it integrates the whole CIR and it does not have a resolution bound.

Advantageously, the determination of the mean channel delay in each frame exchange overcome the problems of time-dispersive and limited sampling period T and offers a very robust ToA estimation.

*According to the invention the mean delay value of the $i^{th}$ channel is determined as:*

$$\tau_i = T \frac{\sum_W |h[n]|^2 \cdot n}{\sum_W |h[n]|^2}$$

*wherein W is a sum window and n the sum index.*

Most wireless systems process the received and transmitted information in the discrete domain through a Digital Signal Processor (DSP). Therefore, the channel delay is obtained from the discrete impulse response h[n] that depends on the first sampled sequence s[n] and the second sampled sequence r[n].

The above operator uses the whole discrete impulse response to precisely estimate the ToA and can be seamlessly used in both LoS and NLoS conditions, because it does not rely on the detection of the main channel component and because it is very robust to multipath propagation.

In a particular embodiment, *signal r(t) comprises a noise component and may be expressed as r(t) = s(t) * h(t) + n(t), being n(t) the noise component.*

In a particular embodiment, *the second timestamp $t_2$ and the third timestamp $t_3$ are transmitted by the slave to the master in the second frame; and the time correction Δt is determined by the master.*

To determine the time correction, the four timestamps are needed. In this embodiment, the master performs the calculation of the time correction. The four timestamps have to be in the master side to perform the calculation.

The first timestamp is stamped by the master when transmitted the first frame and the fourth timestamp is stamped by the master when the second frame arrives the master. However, the second and the third timestamps are stamped by the slave. In this case, the slave should send these timestamps to the master. Once the four timestamps are in the master side, it performs the calculations of the time correction.

In this embodiment, to calculate the time correction in the master side, only two frames are necessary to determine the four timestamps. A first frame from the master to the slave and a second frame from the slave to the master.

In a particular embodiment, *the first timestamp $t_1$ is transmitted by the master to the slave in the first frame; transmitting a third frame from the master to the slave wherein the fourth timestamp $t_4$ is transmitted in said third frame from the master to the slave; and, the time correction $\Delta t$ is determined by the slave.*

In this embodiment, the slave performs the calculation of the time correction. The four timestamps have to be in the slave side to perform the calculation.

The second timestamp is stamped by the slave when the first frame arrives the slave and the third timestamp is stamped by the slave when transmitted the second frame to the master. The first timestamp stamped by the master is transmitted to the slave in the first frame. In this case, the master should send the fourth timestamp to the slave in a third frame. Once the four timestamps are in the slave side, it performs the calculations of the time correction.

In this embodiment, to calculate the time correction in the slave side, a third frame is necessary to deliver the four timestamps to the slave. A first frame from the master to the slave, a second frame from the slave to the master and a third frame from the master to the slave in which the fourth timestamp is sent.

In a particular embodiment, *the impulse response of the channel h[n] is estimated by $\tilde{h}[n]$ as the cross-correlation $R_{r,s}[n]$ between the first sampled sequence s[n] and the second sampled sequence r[n].*

In most communications systems the CIR is not known, thus it has to be estimated at the receiver. In this embodiment, the impulse response of the channel is estimated by the cross-correlation of the first sampled sequence s[n] and the second sampled sequence r[n]. This estimator is very appropriate in this case because the estimation is directly obtained in the time domain.

In a particular embodiment, *the impulse response of a channel h[n] is estimated according to the following steps:*

- *transforming r[n] and s[n] from the discrete time domain to the frequency domain through the direct Fourier transform resulting R[Ω] and S[Ω] respectively:*

$$R[\Omega] = fft(r[n]),$$

$$S[\Omega] = fft(s[n]);$$

- *estimating the impulse response h[n] of the channel in the frequency domain as:*

$$\tilde{H}[\Omega] = R[\Omega] \cdot S[\Omega];$$

- *transforming the estimated impulse response of the channel $\tilde{H}[\Omega]$ from the frequency domain to the discrete time domain through the inverse Fourier transform as:*

$$\tilde{h}[n] = ifft(\tilde{H}[\Omega])$$

*wherein fft(\*) denotes the direct Fourier Transform and ifft(\*) denotes the inverse Fourier transform.*

In this embodiment, the impulse response of the channel is determined using the direct and inverse Fourier transform. The Fourier transform decomposes a function of time (signal) into its constituent frequencies. The channel is estimated in the frequency domain, and the Inverse Fourier transform is used to reconstruct the channel estimation in the time domain.

In a particular embodiment, *the timestamp correction factor $\tau_i$ of the $i^{th}$ channel is estimated as:*

$$\tau_i = T \frac{\sum_{n=n_s}^{n_s+N_W-1} |\tilde{h}[n]|^2 \cdot n}{\sum_{n=n_s}^{n_s+N_W-1} |\tilde{h}[n]|^2}$$

*wherein $\tilde{h}[n]$ is the estimated h[n] and*

$$N_W = \left\lceil \frac{T_h}{T} \right\rceil,$$

*being $N_W$ the sum window duration and $T_h$ the length of the $i^{th}$ channel impulse response (CIR) in nanoseconds, being $n_s$ an estimation of the start of the CIR and n the sum index.*

In this embodiment, the sum window is defined for the sum window duration minus 1, beginning at the estimation of the start of the CIR ($n_s$). $N_W$ is configured according to the communication systems properties. $T_h$ may be set to the duration of the cyclic prefix, due to it is the maximum CIR duration to avoid inter symbol interferences.

The channel delay has been defined in terms of the estimation of the discrete impulse response of the channel $\tilde{h}[n]$ that depends on the first sampled sequence s[n] and the second sampled sequence r[n].

The above operator uses the whole CIR to precisely estimate the ToA and can be seamlessly used in both LoS and NLoS conditions, because it does not rely on the detection of the main channel component and because it is very robust to multipath propagation.

In a particular embodiment, $n_{ini}$, the ToA of the frome is estimated as

$$n_{ini} = min\{n \epsilon \mathbb{N} / |R_{r,s}[n]|^2 > \theta\}$$

being $\theta$ a threshold to decide whether a frame has been detected or not.

In this embodiment, the frame start detector included in the physical layer of the communication system is used to do a first estimation of the ToA. The frame detector is based on detecting a known sequence in the received samples. In order to find the training sequence, $s[n]$ is cross-correlated with $r[n]$. $R_{r,s}[n]$ is the cross-correlation between $s[n]$ and $r[n]$. $R_{r,s}[n]$ will have a peak when the training sequence is cross-correlated with the received training sequence. If the peak exceeds a threshold, it will be considered that a frame has been detected.

In a particular embodiment, $n_s$ is estimated as $n_s = n_{ini} - N_W/2$.

$n_s$ is an estimation of the start of the CIR, $n_{ini}$ is set as the mid position of the CIR and $N_W$ the sum window duration.

In a particular embodiment, *the calculation of the timestamp correction factor $\tau_i$ is iteratively repeated by:*

- *estimating $n_s$ as $n_s = n_{ini} - N_W/2$ before computing $\tau_i$ and,*
- *re-estimating $n_{ini}$ as $n_{ini}(\tau_i) = round(\tau_i/T)$;*

*until a maximum predetermined number of iterations or until the relative error of the estimated $\tau_i$ value is under a predetermined threshold for the $i^{th}$ channel.*

Firstly, $n_{ini}$ is set as the mid position of the CIR and $n_s$ is estimated as $n_s = n_{ini} - N_W/2$ before computing the timestamp correction factor $\tau_i$. Afterwards, the timestamp correction factor is calculated. Estimation may not be exact, so $n_{ini}$ is recalculated using the timestamp correction factor $\tau_i$ already obtained. This process is iteratively done until a fixed number of iterations or until the relative error of the estimated $\tau_i$ value is under a predetermined threshold.

This robust algorithm is able to provide high synchronization accuracy over a large variety of conditions.

In a particular embodiment, *the communication between the master and the at least one master is wireless.*

ToA estimators have two main limitations over wireless: the timestamps quantization caused by the usually low bandwidth of wireless systems and the wireless channel behavior. The wireless channel behavior is the most challenging limitation, as wireless channels usually present multipath propagation, which causes time dispersion and deteriorates the ToA estimation. However, the combination of a wireless communication and any of the former embodiments provides a sub-nanosecond accuracy even if Non-Line-Of-Sight conditions or time-variant conditions exist.

The enhanced timestamping method precision is independent of the sampling period and that it offers a very robust ToA estimation over time-dispersive and time-variant channels.

In a particular embodiment, *the window of sampling (W) is determined as the length of the communication channel.*

In a second inventive aspect, the invention provides a *system comprising*

- *a master comprising a processing unit and a local clock;*
- *at least one slave comprising a processing unit and a local clock;*
- *communication means between the master and the at least one slave;*

*wherein the processing unit of the master, the processing unit of the at least one slave or both are configured to carry out a method according to any of previous embodiments of the first inventive step for synchronizing the local clock of the master local clock and the local clock of the at least one slave.*

In a particular embodiment, *the communication means between the master and the at least one slave are wireless.*

## DESCRIPTION OF THE DRAWINGS

These and other features and advantages of the invention will be seen more clearly from the following detailed description of a preferred embodiment provided only by way of illustrative and non-limiting example in reference to the attached drawings.

Figure 1     This figure shows the master-slave frame exchange structure follow by the precision time protocol (PTP) of a particular example according to the state of the art.

Figure 2     This figure shows the time synchronization accuracy over WLAN channel A as function of the speed of the nodes for different Signal to Noise Ratio (SNR) for a particular embodiment of the invention.

Figure 3     This figure shows the time synchronization accuracy over WLAN channel B as function of the speed of the nodes for different SNR for a particular embodiment of the invention.

Figure 4     This figure shows the time synchronization accuracy over WLAN channel C as function of the speed of the nodes for different SNR for a particular embodiment of the invention.

Figure 5    This figure shows the time synchronization accuracy over WLAN channel E as function of the speed of the nodes for different SNR for a particular embodiment of the invention.

Figure 6    This figure shows the time synchronization accuracy over WLAN channel B as function of the speed of the nodes for different SNR with $T_{S-D_r}$ = 0.1 ms for a particular embodiment of the invention, being $T_{S-D_r}$ the elapsed time between the Sync frame (first frame) and the Delay Request frame (second frame).

## DETAILED DESCRIPTION OF THE INVENTION

As will be appreciated by one skilled in the art, aspects of the present invention may be embodied as a system or method.

The present invention describes an enhanced timestamping method for sub-nanosecond time synchronization.

The invention will be seen more clearly from the following detailed description of a preferred embodiment provided only by way of illustrative and non-limiting example. In this preferred embodiment the enhanced timestamping method is combined with the PTP protocol and measured over the IEEE 802.11 Wireless Local Area Network (WLAN) standard channel models.

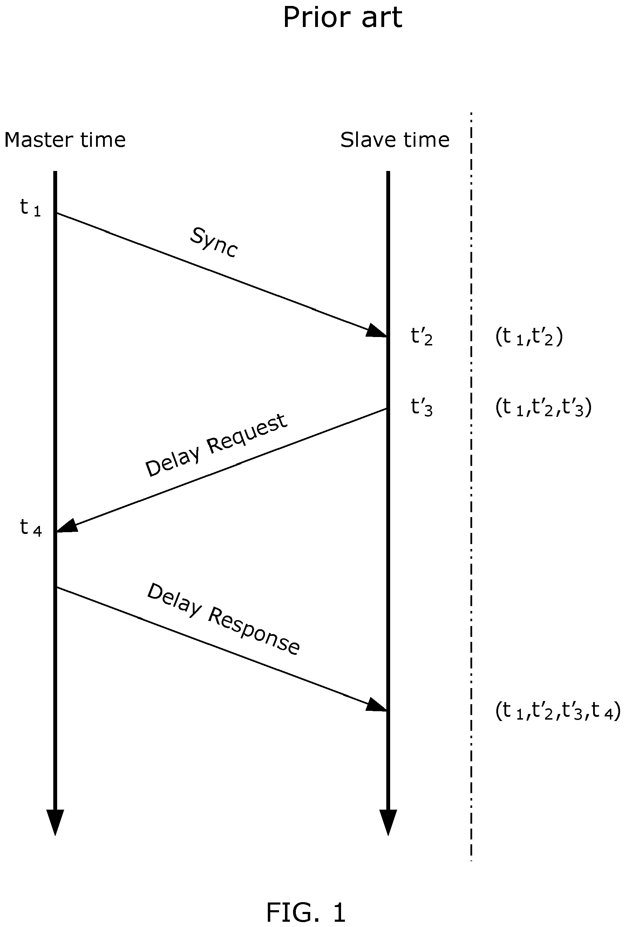

Figure 1 shows the master-slave frame exchange structure follow by the precision time protocol (PTP) of a particular example. In the state of the art, PTP is a well-known and broadly used protocol.. The protocol follows a master-slave structure, where the master shares its local time with the slave connected to it.

In this particular example, the synchronization process comprises a frame exchange exchanging one Sync frame (a first frame), one Delay Request frame (a second frame) and one Delay Response frame (a third frame) providing timestamps for computing the time correction between the local time of the slave and the local time of the master.

To perform the time distribution, four timestamps are taken when exchanging the Sync frame and the Delay Request frame between the master and the slave.

In the particular mentioned example, a Sync frame is transmitted by the master to the slave, which records the $t_1$ timestamp. The $t_1$ timestamp is delivered through the Sync frame. The frame arrives to the slave that estimates the time of arrival (ToA) and records the timestamp $t'_2$. Afterwards, the Delay Request frame (Delay_Req) is transmitted by the slave to obtain two more timestamps ($t'_3$, $t_4$). Finally, the Delay Response frame (Delay_Resp) delivers from the master the $t_4$ timestamp to the slave.

Once the four timestamps are in the slave side, it performs the calculations stated in the following formulas to synchronize its time with the master time,

$$\tilde{t}_{ms} = \frac{t'_2 - t_1 + t_4 - t'_3}{2}$$

$$\tilde{t}_o = t'_2 - t_1 - \tilde{t}_{ms}$$

Where $\tilde{t}_{ms}$ represents the estimated path delay and $\tilde{t}_o$ is the estimated clock offset between the master and slave clocks. The time correction is performed by subtracting $\tilde{t}_o$ from the slave time.

The timestamp $t'_2$ and timestamp $t'_4$ are enhanced timestamps corrected by the timestamp correction factor $\tau_i$, as $t'_2 = t_2 + \tau_{i_0}$ and as $t'_4 = t_4 + \tau_{i_1}$. In the state of the art, a common approach to take the receive timestamps is to use the frame start detector included in the physical layer of the communication system. A widely used frame detector is based on detecting a known sequence in the received samples. The timestamping algorithm is based on threshold detection, relying on detecting the first component or the first signal replica. This method does not have a correction factor $\tau_i$.

This simple solution has some drawbacks, the algorithm is not robust to multipath propagation and the timestamps are quantized to the sampling period.

In other to overcome the limitations of conventional timestamps, the enhanced timestamps are developed as stated in the description of the invention.

The main error contributions in wireless PTP are: the time-dispersive and time-variant character of the wireless channels, the timestamping error, and the calibration of the nodes. At a given instant, we can consider that the wireless CIR from master to slave equals the CIR from slave to master (symmetric channel) and, thus, $t_{ms} = t_{sm}$. However, a wireless CIR is varying along the time due to environment changes. Thus, to satisfy the assumption of symmetry it is necessary that the elapsed time between the PTP sync and PTP Delay Request ($T_{S-D_r}$) is much smaller than the coherence time of the channel.

The following example describes a particular embodiment of the enhanced timestamping method combined with the PTP protocol to provide high synchronization accuracy over a large variety of wireless conditions.

To achieve this purpose, it has been assumed that the uplink CIR equals the downlink CIR during the PTP sync and PTP delay request frame exchanges and that the CIR stays constant during that period of time ($T_{S-D_r}$).

To avoid frame collisions, a wireless system can use a unicast PTP implementation. Although common PTP implementations are multicast/broadcast, the use of unicast PTP over wireless is very convenient, as it solves some issues found in wireless, such as the collisions problem and, in fact, PTP standard supports unicast implementations. Then, the master clock will keep each slave synchronized by pooling them with Sync frames, which will be answered with PTP delay request frames.

In this particular embodiment, the impulse response of the channel $h[n]$ is estimated by $\tilde{h}[n]$ as the cross-correlation $R_{r,s}[n]$ between the first sampled sequence $s[n]$ and the second sampled sequence $r[n]$.

The timestamping correction factor $\tau_i$ of the i$^{th}$ channel is estimated as its mean delay:

$$\tau_i = T \frac{\sum_{n=n_s}^{n_s+N_W-1}\left|\tilde{h}[n]\right|^2 \cdot n}{\sum_{n=n_s}^{n_s+N_W-1}\left|\tilde{h}[n]\right|^2}$$

wherein

$$N_W = \left\lceil \frac{T_h}{T} \right\rceil,$$

$n_{ini}$ is estimated as

$$n_{ini} = \min\{n\epsilon\mathbb{N}/\left|R_{r,s}[n]\right|^2 > \theta\},$$

$n_s$ is estimated as $n_s = n_{ini} - N_W/2$.

In this embodiment, to determine the timestamp correction factor $\tau_i$, the $\tau_i$ formula is iteratively repeated by re-estimating $n_s$ as $n_s = n_{ini} - N_W/2$ before computing $\tau_i$ and re-estimating $n_{ini}$ as $n_{ini}(\tau_i) = round(\tau_i/T)$ until a predetermined number of iterations. The number of iterations of the algorithm for the simulations has been set to $K_{it} = 2$.

In order to test the synchronization performance of the enhanced timestamping method some simulations have been carried out according to the previous embodiment.

The wireless physical layer used to test the synchronization performance is the physical layer of the IEEE 802.11n WLAN standard. The carrier frequency has been set to 2.412 GHz. The bandwidth of the system has been set to 20 MHz. A Single Input, Single Output (SISO) antenna configuration has been used.

The 802.11 frames comprise two main training sequences, the Short Training Field (STF), and the Long Training Field (LTF). The STF and LTF sequences have a total length of 160 samples each. The LTF is situated after the STF, and it is used to detect the frame start after the frequency offset correction. Therefore, the training sequence $s[l]$ is the LTF. Specifically, $s[l]$ is the last 128 samples of the LTF sequence (the cyclic prefix has been eliminated to gain robustness against inter-symbol interference). The 802.11 frames have been generated using the MATLAB® WLAN Toolbox™.

The system performance has been evaluated over the A, B, C and E 802.11 standard channel models. These channel models are widely used to evaluate wireless systems and they represent four different environments, from small office to open space. The channel models have an RMS delay spread of 50 ns, 100 ns, 150 ns and 250 ns respectively.

The system performance has been also evaluated over mobile conditions, because the CIR variation is the main limitation of the synchronization scheme performance along with the SNR. Therefore, and to test the synchronization scheme over a high variety of scenarios, the simulations have been carried out over mobile conditions using mobile nodes from nearly static nodes to nodes running at 300 km/h.

The invariance of the CIR during $T_{S-D_r}$ time entails a fast frame exchange. For instance, for low mobile conditions (up to 3 km/h), $T_{S-Dr} = 1$ ms is enough to keep the time synchronization performance, meanwhile for higher speeds (more than 80 km/h) an elapsed time $T_{S-Dr} = 0.1$ ms might be necessary.

Regarding the PTP configuration, the PTP frame exchange period has been set to 1 s, which means that the whole frame exchange is performed every 1 s, and it is considered that $T_{S-Dr} = 1$ ms.

The clock sampling period has been set to 50 ns, equal to the bandwidth of the system. The maximum clock drift of both master and slave clocks has been set to 10 ppm and the standard deviation of the clock jitter has been set to 8 ps following a normal distribution, which is a common value in oscillators used in wireless systems.. The clock drift and the time start of the master and the slave clocks have been set to a random value for each simulation.

It has been found in preliminary simulations that the algorithm to estimate the start window shows little improvements for more than 2 iterations. This is interpreted as the proposed method has very fast convergence. Therefore, as stated before, the number of iterations for the simulation has been set to $K_{it} = 2$. Besides, the length of the channel has been set to $T_h = 16T$ (800 ns), (equal to the cyclic prefix length in a 802.11 frame), and $T_g = 7T$ (350 ns), thus $N = 30$.

The selected values for the said variables are representative of the set of common values.

The simulation tool used to evaluate the performance of the enhanced timestamps is MATLAB®. The simulation has been carried out as follows. Firstly, the channel models are generated using the Power Delay Profile (PDP). Afterwards, a fixed number of PTP frame exchanges are performed and the slave clock is corrected in each frame exchange. Finally, the time synchronization error is calculated in each frame exchange as the difference between the master time and the slave corrected time. A total of $10^4$ PTP frame exchanges have been carried out for each speed and SNR.

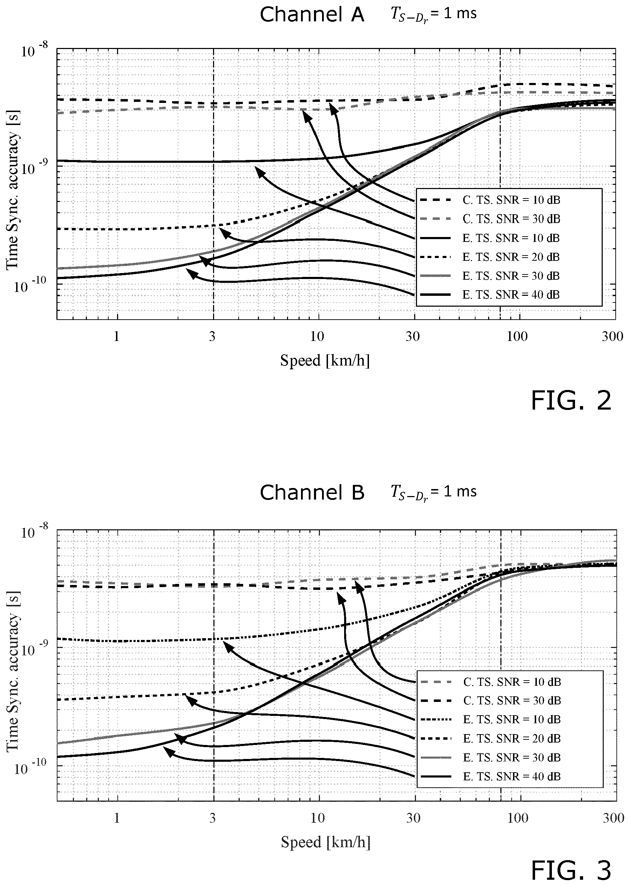

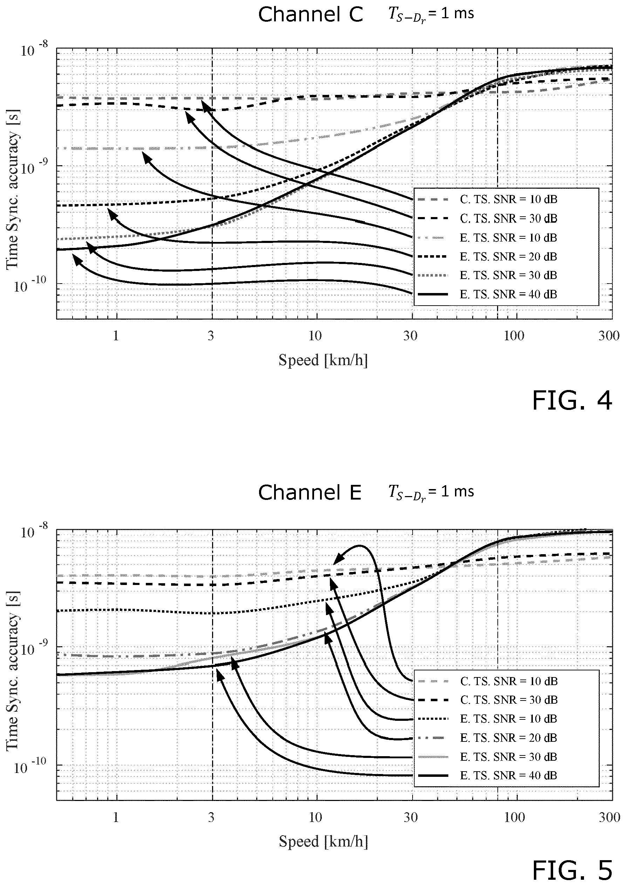

Figures 2, 3, 4 and 5 show the results of the time synchronization accuracy in the four different environments and over different mobile conditions.

The figures show the results of the simulations using both, conventional timestamps (C. TS.) and the enhanced timestamps implemented (E. TS.). The conventional timestamping algorithm is based on threshold frame start detection.

The results show that the enhanced timestamps have three different performance regions regarding the channel variation rate during the PTP sync and PTP delay request exchange: slowly time-variant ($v < 3$ km/h), mid time-variant ($3$ km/h $< v < 80$ km/h), and fast time-variant ($v > 80$ km/h). The three regions are noticeable in the results over the four channel models and are indicated by the vertical black dashed lines.

In the first region, the slowly time-variant region ($< 3$ km/h), the channel coherence time is 30 times higher than $T_{S-Dr}$, thus the wireless channel can be considered symmetric during the PTP frame exchange. This is clearly represented in the results as the proposed synchronization scheme obtains a time synchronization of less than 220 ps (0.22 ns) at an SNR of 30 dB over channel A and B, which is 25 times smaller than the achieved by the conventional timestamps under the same conditions. On the other hand, and compared to the results over channel A and B, the performance of the enhanced timestamps is slightly deteriorated in the simulation over channel C and severely deteriorated in the simulation over channel E. This is caused by the error of the correlation window.

In the second region (from 3 km/h to 80 km/h), the synchronization performance is linearly deteriorated as a function of the speed of the nodes. This is the expected behavior, as the channel coherence time is still very high, but it is not enough to consider a perfectly symmetric channel. Regarding the synchronization accuracy with conventional timestamps, it is not very affected by the changes in the environment, but their performance is still very far from the performance of the enhanced timestamps.

Finally, in the fast time-variant region ($> 80$ km/h) the synchronization performance of the conventional timestamps and the enhanced timestamps converges. This situation is reached at 80 km/h because the channel coherence time at such speed is approximately equal to $T_{S-Dr} = 1$ ms.

To gain more insight about the relation between the channel variation rate and the value of $T_{S-Dr}$, one more simulation over the channel model B have been carried out, but using $T_{S-Dr} = 0.1$ ms. $T_{S-Dr} = 0.1$ ms is a very challenging requirement in wireless communications, but it can be obtained by using some existing mechanisms of IEEE 802.11.

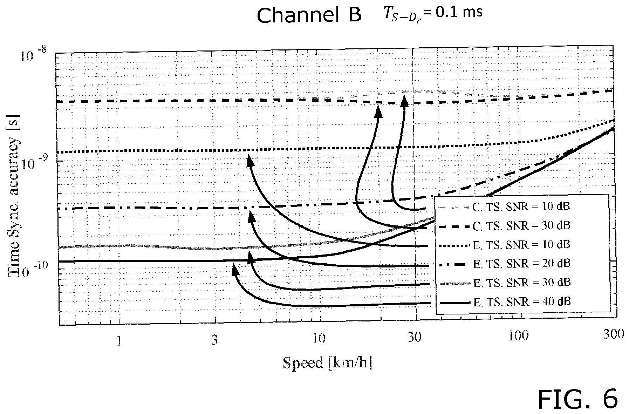

Figure 6 shows the time synchronization accuracy over WLAN channel B as function of the speed of the nodes for different SNR according to the previous embodiment.

The results show that there is a strong relation between the time synchronization performance and $T_{S-Dr}$. In fact, the threshold between the first and the second region is shifted to the right from 3 km/h to 30 km/h. Therefore, the requirement of channel symmetry during the PTP frame exchange has been verified numerically, and it has been shown that $T_{S-Dr}$ has a great impact in the synchronization performance. Thus, to ensure almost perfect channel symmetry and obtain high time synchronization performance $T_{S-Dr}$ should be at least 20-30 times lower than the channel coherence time.

Conventional ToA estimators have two main limitations over wireless: the timestamps quantization caused by the usually low bandwidth of wireless systems and the wireless channel behavior. The wireless channel behavior is the most challenging limitation, as wireless channels usually present multipath propagation, which causes time dispersion and deteriorates the ToA estimation. Furthermore, the multipath propagation is subject to variations caused by the movements of the nodes or environment changes, which dynamically varies the channel delay.

These simulations show that the use of the enhanced timestamping compared to conventional timestamping yields a meaningful increase of synchronization accuracy that reaches sub-nanosecond performance.

The numeric simulations show that PTP combined with the enhanced timestamps can provide sub-nanosecond time transfer accuracy at slowly time-variant conditions, i.e. when the CIR can be considered constant during $T_{S-Dr}$. The results also show that the synchronization performance is deteriorated when the ratio between the channel coherence and $T_{S-Dr}$ is lowered, because the channel cannot be considered symmetric as it is not invariant. The performance of the enhanced and conventional timestamps converge when the channel coherence is equal to $T_{S-Dr}$. Hence, it can be concluded that the enhanced timestamps greatly outperforms the conventional timestamps under the design assumption of channel symmetry between the master and slave.

The proposed synchronization scheme may be very useful in the implementation of wireless systems that needs accurate time synchronization, such as wireless industrial networks. Furthermore, its use may be very interesting in other applications that needs a network just to perform time synchronization, such as scientific experiments or wireless localization.

## Claims

1. A method for time synchronization between a master and at least one slave wherein the synchronization method comprises a frame exchange exchanging at least a first frame from the master to the slave and a second frame from the slave to the master; wherein for a communication between a transmitter and a receiver through an $i^{th}$ channel a timestamping correction factor is determined according to the following steps:

   a) generating a signal $s(t)$ by the transmitter; being $s(t)$ generated from a predetermined first sampled sequence $s[n]$, the first sampled sequence $s[n]$ being known by the transmitter and receiver and sampled with a predetermined sampling period $T$;
   b) sending the signal $s(t)$ by the transmitter through the $i^{th}$ channel;
   c) receiving a signal $r(t)$ by the receiver, being the response to the sent signal $s(t)$ sent by the transmitter through the $i^{th}$ channel, wherein $r(t)$ may be expressed as:

   $$r(t) = s(t) * h(t),$$

   being $h(t)$ the $i^{th}$ channel impulse response;
   d) sampling received signal $r(t)$ as a second sampled sequence $r[n]$, sampled with the sampling period $T$;
   e) computing the discrete impulse response of the channel $h[n]$ depending on the first sampled sequence $s[n]$ and on the second sampled sequence $r[n]$, being $h[n]$ a representation of $h(t)$ in the discrete domain;
   f) determining a timestamping correction factor of the $i^{th}$ channel $\tau_i > 0$ as the mean delay value of the transmission of a signal through said $i^{th}$ channel being determined as:

   $$\tau_i = T \frac{\sum_W |h[n]|^2 \cdot n}{\sum_W |h[n]|^2}$$

   wherein $W$ is a sum window and $n$ the sum index; and,
   wherein the synchronization between a master and at least one slave is determined according to the following steps:
   g) determining at least four timestamps when exchanging the at least one first frame between the master as transmitter and the at least one slave as receiver through a first channel and the second frame between the at least one slave as transmitter and the master as receiver through a second channel by:

   - determining a first timestamp $t_1$ of the first frame, stamped by the master when transmitted said first frame through the first channel by the master to the slave,
   - determining a second timestamp $t_2$ of the first frame, stamped by the slave when it arrives the slave,
   - determining a third timestamp $t_3$ of the second frame, stamped by the slave when transmitted through the second channel by the slave,
   - a fourth timestamp $t_4$ of the second frame, stamped by the master when it arrives the master;

   h) determining a time correction $\Delta t$ between the local time of the at least one slave and the local time of the master as:

   -

   $$\Delta t = t'_2 - t_1 - \frac{t'_2 - t_1 + t'_4 - t_3}{2};$$

   being $t'_2$ and $t'_4$ corrected timestamps determined as $t'_2 = t_2 + \tau_1$, and $t'_4 = t_4 + \tau_2$ being $\tau_1$, the delay of the first channel and $\tau_2$ the delay of the second channel;

   i) correcting the local time of the master, of the at least one slave or both with the time correction $\Delta t$ computed in the previous step synchronizing the master and the at least one slave.

2. A method according to claim 1, wherein $r(t)$ comprises a noise component and may be expressed as $r(t) = s(t) * h(t) + n(t)$, being $n(t)$ the noise component.

3. A method according to claim 1 or 2, wherein:

   - the second timestamp $t_2$ and the third timestamp $t_3$ is transmitted by the slave to the master in the second frame; and,
   - the time correction $\Delta t$ is determined by the master.

4. A method according to claim 1 or 2, wherein:

   - the first timestamp $t_1$ is transmitted by the master to the slave in the first frame;
   - transmitting a third frame from the master to the slave wherein the fourth timestamp $t_4$ is transmitted in said third frame from the master to the slave; and,
   - the time correction $\Delta t$ is determined by the slave.

5. A method according to any previous claims, wherein the impulse response of the channel $h[n]$ is estimated by $h[n]$ as the cross-correlation $R_{r,s}[n]$ between the first sampled sequence $s[n]$ and the second sampled sequence $r[n]$.

6. A method according to any of claims previous claims, wherein the impulse response of a channel $h[n]$ is estimated according to the following steps:

- transforming $r[n]$ and $s[n]$ from the discrete time domain to the frequency domain through the direct Fourier transform resulting $R[\Omega]$ and $S[\Omega]$ respectively:

$$R[\Omega] = \mathrm{fft}(r[n]),$$

$$S[\Omega] = \mathrm{fft}(s[n]);$$

- estimating the impulse response $h[n]$ of the channel in the frequency domain as:

$$\widetilde{H}[\Omega] = \mathrm{R}[\Omega] \cdot \mathrm{S}[\Omega];$$

- transforming the estimated impulse response of the channel $\widetilde{H}[\Omega]$ from the frequency domain to the discrete time domain through the inverse Fourier transform as:

$$\tilde{h}[n] = \mathrm{ifft}(\widetilde{H}[\Omega])$$

wherein fft(*) denotes the direct Fourier Transform and ifft(*) denotes the inverse Fourier transform.

7. A method according to any of previous claims, wherein the timestamp correction factor $\tau_i$ of the $i^{\text{th}}$ channel is estimated as:

$$\tau_i = T \frac{\sum_{n=n_s}^{n_s+N_W-1} |\tilde{h}[n]|^2 \cdot n}{\sum_{n=n_s}^{n_s+N_W-1} |\tilde{h}[n]|^2}$$

wherein $\tilde{h}[n]$ is the estimated $h[n]$ and

$$N_W = \left\lceil \frac{T_h}{T} \right\rceil,$$

being $N_W$ the sum window duration and $T_h$ the length

of the $i^{\text{th}}$ channel impulse response (CIR) in nanoseconds,

being $n_s$ an estimation of the start of the CIR and $n$ the sum index.

8. A method according to any of previous claims, wherein $n_{ini}$, the mean value of the CIR is estimated as

$$n_{ini} = \min\{n\epsilon\mathbb{N}/|R_{r,s}[n]|^2 > \theta\}$$

being $\theta$ a threshold to decide whether a frame has been detected or not.

9. A method according to any of claims 7 or 8, wherein $n_s$ is estimated as $n_s = n_{ini} - N_W/2$.

10. A method according to any of previous claims, wherein the calculation of timestamp correction factor $\tau_i$ is iteratively repeated by:

- estimating $n_s$ as $n_s = n_{ini} - N_W/2$ before computing $\tau_i$ and,
- re-estimating $n_{ini}$ as $n_{ini}(\tau_i) = round(\tau_i/T)$;

until a maximum predetermined number of iterations or until the relative error of the estimated $\tau_i$ value is under a predetermined threshold for the $i^{\text{th}}$ channel.

11. A method according to any of previous claims, wherein the communication between the master and the at least one master is wireless.

12. A method according to any of previous claims, wherein the window of sampling (W) is determined as the length of the communication channel.

13. A system comprising:

- a master comprising a processing unit and a local clock;
- at least one slave comprising a processing unit and a local clock;
- communication means between the master and the at least one slave;

wherein the processing unit of the master, the processing unit of the at least one slave or both are configured to carry out a method according to any of previous claims for synchronizing the local clock of the master local clock and the local clock of the at least one slave.

14. A system according to claim 13, wherein the communication means between the master and the at least one slave are wireless.

**15.** A computer program product comprising instructions which, when the program is executed by a computer, cause the computer to carry out the steps of the method according to any of claims 1 to 12.

# Prior art

Master time      Slave time

$t_1$

Sync

$t'_2$  $(t_1, t'_2)$

$t'_3$  $(t_1, t'_2, t'_3)$

Delay Request

$t_4$

Delay Response

$(t_1, t'_2, t'_3, t_4)$

FIG. 1

Channel A $\quad T_{S-D_r} = 1$ ms

FIG. 2

Channel B $\quad T_{S-D_r} = 1$ ms

FIG. 3

Channel C    $T_{S-D_r}=1$ ms

FIG. 4

Channel E    $T_{S-D_r}=1$ ms

FIG. 5

Channel B $T_{S-D_r} = 0.1$ ms

FIG. 6

Europäisches
Patentamt

European
Patent Office

Office européen
des brevets

# EUROPEAN SEARCH REPORT

Application Number

EP 20 38 2008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEIJO OSCAR ET AL: "IEEE 1588 Clock Synchronization Performance over Time-Varying Wireless Channels", 2018 IEEE INTERNATIONAL SYMPOSIUM ON PRECISION CLOCK SYNCHRONIZATION FOR MEASUREMENT, CONTROL, AND COMMUNICATION (ISPCS), IEEE, 30 September 2018 (2018-09-30), pages 1-6, XP033451153, DOI: 10.1109/ISPCS.2018.8543078 [retrieved on 2018-11-21] * the whole document * | 1-15 | INV. H04J3/06 H04W56/00 |
| A | WO 2019/170256 A1 (HUAWEI TECH CO LTD [CN]; CAO HANWEN [DE]) 12 September 2019 (2019-09-12) * page 1, line 26 - line 32 * * page 2, line 25 - page 3, line 21 * * page 14, line 10 - page 15, line 33 * * figures 1,3 * | 1-15 | |
| A | LATINOVIC ZORAN ET AL: "A Channel Model for Indoor Time-of-Arrival Ranging", IEEE TRANSACTIONS ON WIRELESS COMMUNICATIONS, IEEE SERVICE CENTER, PISCATAWAY, NJ, US, vol. 19, no. 2, 26 November 2019 (2019-11-26), pages 1415-1428, XP011772173, ISSN: 1536-1276, DOI: 10.1109/TWC.2019.2954318 [retrieved on 2020-02-10] * page 1416, right-hand column, paragraph 4 - page 1417, right-hand column, paragraph 2 * | 1,7 | TECHNICAL FIELDS SEARCHED (IPC) H04J H04W H04L |

-----

-----

-/--

The present search report has been drawn up for all claims

| Place of search | Date of completion of the search | Examiner |
|---|---|---|
| The Hague | 19 June 2020 | Pieper, Thomas |

EPO FORM 1503 03.82 (P04C01)

Europäisches
Patentamt

European
Patent Office

Office européen
des brevets

## EUROPEAN SEARCH REPORT

Application Number

EP 20 38 2008

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHINSUKE HARA ET AL: "A Perturbation Analysis on the Performance of TOA and TDOA Localization in Mixed LOS/NLOS Environments", IEEE TRANSACTIONS ON COMMUNICATIONS, IEEE SERVICE CENTER, PISCATAWAY, NJ. USA, vol. 61, no. 2, 1 February 2013 (2013-02-01), pages 679-689, XP011495276, ISSN: 0090-6778, DOI: 10.1109/TCOMM.2013.012313.110509 * page 679, right-hand column, paragraph 2 - right-hand column, paragraph 3 * ----- | 1 | |

TECHNICAL FIELDS
SEARCHED     (IPC)

The present search report has been drawn up for all claims

| Place of search | Date of completion of the search | Examiner |
|---|---|---|
| The Hague | 19 June 2020 | Pieper, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 849 112 A1**

## ANNEX TO THE EUROPEAN SEARCH REPORT
## ON EUROPEAN PATENT APPLICATION NO.

EP 20 38 2008

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2020

| Patent document cited in search report | Publication date | Patent family member(s) | Publication date |
|---|---|---|---|
| WO 2019170256 A1 | 12-09-2019 | NONE | |

EPO FORM P0459

For more details about this annex : see Official Journal of the European Patent Office, No. 12/82